# EUROPÄISCHE PATENTSCHRIFT

(11) **EP 1 476 806 B1**
(45) Veröffentlichungstag und Bekanntmachung des Hinweises auf die Patenterteilung: **25.07.2007**
(21) Anmeldenummer: 03742488.4
(22) Anmeldetag: 12.02.2003
(51) Int. Cl.: G06F 9/38, G06F 9/302, G06F 9/30

(54) **VERFAHREN UND ANORDNUNG ZUR ZUSAMMENFÜHRUNG VON DATEN AUF PARALLELEN DATENPFADEN**
METHOD AND ARRANGEMENT FOR BRINGING TOGETHER DATA ON PARALLEL DATA PATHS
PROCEDE ET DISPOSITIF DE COMBINAISON DE DONNEES SUR DES CHEMINS DE DONNEES PARALLELES

(30) Priorität: 18.02.2002 DE 10206830
(43) Veröffentlichungstag der Anmeldung: 17.11.2004
(73) Patentinhaber: Philips Semiconductors Dresden AG, 01099 Dresden (DE)
(72) Erfinder: DRESCHER, Wolfram, 01099 Dresden (DE)
(74) Vertreter: Adler, Peter
(86) Internationale Anmeldenummer: PCT/DE2003/000417
(87) Internationale Veröffentlichungsnummer: WO 2003/071431

(56) Entgegenhaltungen:
- DE-A- 19 835 216
- US-A- 6 088 782
- RIXNER S ET AL: "Register organization for media processing" HIGH-PERFORMANCE COMPUTER ARCHITECTURE, 2000. HPCA-6. PROCEEDINGS. SIXTH INTERNATIONAL SYMPOSIUM ON TOULUSE, FRANCE 8-12 JAN. 2000, LOS ALAMITOS, CA, USA,IEEE COMPUT. SOC, US, 8. Januar 2000 (2000-01-08), Seiten 375-386, XP010371904 ISBN: 0-7695-0550-3

## Beschreibung

Die Erfindung betrifft ein Verfahren zur Zusammenführung von Daten aus parallelen Datenpfaden nach dem Oberbegriff des Anspruchs 1 sowie eine zugeordnete Prozessoranordnung nach dem Oberbegriff des Anspruchs 8.

Prozessoren zur parallelen Datenverarbeitung sind seit langem bekannt. Charakteristisch für ihre Architektur ist das Vorsehen von mehreren Verarbeitungseinheiten, durch die eine parallele Verarbeitung der Daten bereitgestellt werden kann. Eine solche Architektur bzw. ein zugeordnetes Verfahren ist beispielsweise in der deutschen Offenlegungsschrift DE 198 35 216 beschrieben. Dabei werden Daten in einem Datenspeicher in Datengruppen mit mehreren Elementen aufgeteilt und unter ein und derselben Adresse abgespeichert. Jedem Element einer Datengruppe ist eine Verarbeitungseinheit zugeordnet, wobei alle Elemente gleichzeitig und parallel aus dem Datenspeicher ausgelesen und als Eingangsdaten auf eine oder mehrere Verarbeitungseinheiten aufgeteilt und in diesen taktgesteuert parallel verarbeitet werden. Die parallelen Verarbeitungseinheiten sind über eine Kommunikationseinheit miteinander verbunden. Eine Verarbeitungseinheit umfasst zumindest eine Prozesseinheit und eine Speichereinheit und ist in einem Streifen angeordnet, der i.d.R. zumindest einem weiteren Streifen gleichen Aufbaus benachbart ist.

In einem derartigen SIMD (Single Instruction Multiple Data) Vektor-Prozessor werden die jeweiligen Datenelemente in den beschriebenen parallelen Datenpfaden (Streifen) verarbeitet. In Abhängigkeit vom abzuarbeitenden Programmes können die Teilergebnisse als Datenelemente oder als Datengruppe in den Gruppenspeicher geschrieben werden. Unter Umständen kann es jedoch notwendig sein, Daten aus parallelen Datenpfaden zusammenzufassen. Beispielsweise kann bei der Ausführung eines Algorithmus auf dem Vektorprozessor der Bedarf bestehen, lokal berechnete Daten aus mehreren Streifen oder auch aus allen Streifen miteinander zu einem globalen Zwischenergebnis zu verknüpfen. Bisher wurden hierzu die Teilergebnisse der Streifen mit Hilfe eines Programms über mehrere Taktzyklen aufgerechnet, um zum gewünschten Zwischenergebnis zu gelangen. Wird dieses globale Zwischenergebnis für die nachfolgenden Berechnungen des Algorithmus benötigt, verzögert sich die Berechnung des Endergebnisses.

Somit besteht die Aufgabe der Erfindung darin, bei der beschriebenen Prozessoranordnung eine Funktionalität bereitzustellen, die es erlaubt, lokale Daten aus den einzelnen Streifen zu verknüpfen, ohne dass damit ein erhöhter Zeitaufwand verbunden ist.

Verfahrensseitig wird die Aufgabe dadurch gelöst, dass Eingangs-, Zwischen- und/oder Ausgangsdaten verschiedener Verarbeitungseinheiten über zumindest eine, wenigstens abschnittsweise kombinatorische und nicht taktgesteuerte Operation verknüpft werden.

Auf überraschend einfache Weise lassen sich mit dem Vorsehen einer kombinatorischen und nicht taktgesteuerten Operation Daten, die verschiedenen Verarbeitungseinheiten zugeordnet sind, schnell zusammenführen, sodass durch die notwendige Verknüpfung die parallele Datenverarbeitung in der Prozessoranordnung nicht wesentlich verzögert wird. Insbesondere ist es damit möglich, das Gesamtergebnis der Verknüpfung innerhalb eines einzelnen Taktzyklus bereitzustellen. Besonders zweckmäßig ist es, wenn mit der Verknüpfungsoperation Daten aus allen Verarbeitungseinheiten verknüpft werden, um die beschleunigte Abarbeitung spezifischer Algorithmen, die auf der Prozessoranordnung ablaufen, bereitzustellen.

Die grundsätzliche Idee der Erfindung ist sowohl auf logische als auch auf arithmetische Operationen übertragbar, sodass prinzipiell alle denkbaren Verknüpfungen von Daten aus verschiedenen Verarbeitungseinheiten bzw. parallelen Datenpfaden erfindungsgemäß ausgeführt werden können.

In einer günstigen Ausgestaltung der Erfindung kann bei der Durchführung der Operation zumindest in einem Teilschritt eine redundante Zahlendarstellung verwendet werden. Insbesondere bei arithmetischen Operationen wie Addition oder Subtraktion können Überträge an allen Stellen der Daten gleichzeitig gebildet und für den nächsten Teilschritt verwendet werden, sodass innerhalb des Teilschrittes der Operation keine Verarbeitung eines Übertrags auftritt, welche die Verarbeitung für nachfolgende Stellen verzögern würde. Somit kann erreicht werden, dass innerhalb eines Teilschrittes der Übertragsvektor annähernd genauso schnell propagiert wie der Summenvektor. Nur im letzten Teilschritt, in welchem Summen- und Übertragsvektor zusammengefügt werden, tritt eine Verzögerung des Ergebnisses durch den "ripple"-Effekt auf.

Um alle möglichen Anforderungen von beliebigen Algorithmen gerecht zu werden, kann vorgesehen sein, dass als Ergebnis der Verknüpfung der lokalen Daten ein einzelnes Datenelement oder auch eine Datengruppe erzeugt wird, sodass erfindungsgemäß beliebige Datenquellen aus den verschiedenen Streifen miteinander verknüpft und das Ergebnis in beliebige Datensenken der Prozessoranordnung geführt werden können.

In einer vorteilhaften Ausführungsform kann das Ergebnis der Operation in eine Verarbeitungseinheit rückgekoppelt werden, womit insbesondere rekursive Algorithmen mit der Erfindung schneller ausgeführt werden können.

Zweckmäßigerweise kann für die Zusammenführung der Daten aus mehreren eingerichteten kombinatorischen, nicht taktgesteuerten Operationen eine einzelne ausgewählt werden. Hierdurch können mehrere Algorithmen bzw. komplexe Algorithmen mit mehreren verschiedenen Zusammenführungen von lokalen Daten in einer Prozessoranordnung umgesetzt werden.

Anordnungsseitig wird die Aufgabe dadurch gelöst, dass die Prozessoranordnung eine zumindest abschnittsweise kombinatorische und nicht taktgesteuerte Verknüpfungsanordnung aufweist, welche Daten aus verschiedenen Streifen, insbesondere Eingangs-, Zwischen- und/oder Ausgangsdaten verschiedener Verarbeitungseinheiten miteinander verknüpft.

Diese erfindungsgemäße Anordnung ermöglicht es, dass die bei bestimmten Algorithmen benötigte Zusammenführungen von lokalen Daten aus verschiedenen Streifen gegenüber dem Stand der Technik schneller durchgeführt werden können, sodass ansonsten auftretende Verzögerungen bei der parallelen Datenverarbeitung vermieden werden.

In einer vorteilhaften Ausführungsform der Erfindung kann die Verknüpfungsanordnung ein Addiernetz, Subtrahiernetz und/oder ein Netz zur Minimum/Maximum-Bildung umfassen, in welchem der Übertrag in einer vorgegebenen Stufe zur Ausführung eines Teilschrittes der Operation in der Logikanordnung an einer Stelle der Daten unabhängig vom Ergebnis vorhergehender Stellen ermittelbar ist. Die Verknüpfungsanordnung kann so aufgebaut sein, dass innerhalb fast allen Teilschritten jeweilig auftretende Übertrage nicht für die Berechnung nachfolgender Stellen herangezogen werden. Nur in dem Teil des Verknüpfungsnetzes, in welchem Summenvektor und Übertragsvektor zusammengeführt sind, ergibt sich die bekannte Verzögerung.

Bei einem Verknüpfungsnetz zur Minimum/Maximum-Bildung über mehrere Streifen ist es vorteilhaft, wenn zwischen den jeweiligen Berechnungsstufen neben dem jeweiligen Extremum auch ein Index weitergegeben wird, welcher den Streifen des Extremums anzeigt.

Es ist zweckmäßig, dass die Prozessoranordnung zur Verknüpfung der verschiedensten Daten innerhalb eines Datenpfades, d.h. Streifens, mit Daten aus anderen Streifen mehrere derartige Verknüpfungsanordnungen aufweist, welche programmgesteuert auswählbar sind. Auf diese weise ist es beispielsweise auch möglich, die gleichen Daten unterschiedlich logisch oder arithmetisch zu verknüpfen.

Der Ausgang der Verknüpfungsanordnung kann wiederum je nach Ausführungsform mit beliebigen Registern der Prozessoranordnung, beispielsweise mit einem Register einer Verarbeitungseinheit, oder auch mit einem globalen Register, in welchem eine Datengruppe ablegbar ist, verbunden sein.

Um einen unnötigen Energieverbrauch der Schaltungsanordnung zu vermeiden, kann vorgesehen sein, dass zumindest einem Eingangsregister der Verknüpfungsanordnung eine Steuereinrichtung zugeordnet ist, mit welcher das Eingangsregisters und damit dessen Daten von der Verknüpfungsanordnung abtrennbar ist bzw. sind. Da die Verknüpfungsanordnung zumindest abschnittsweise kombinatorisch und nicht taktgesteuert arbeitet, kann somit verhindert werden, dass Änderungen der Eingangsdaten der Verknüpfungsanordnung automatisch die Anordnung anstoßen, obwohl dies zum gegebenen Zeitpunkt nicht notwendig ist bzw. noch nicht alle Eingangsdaten vorliegen.

Die Erfindung wird im Folgenden durch das Beschreiben einiger Ausführungsformen unter Bezugnahme auf die beiliegenden Zeichnungen erläutert, wobei
- Fig. 1: eine schematische Darstellung einer ersten erfindungsgemäßen Prozessorarchitektur,
- Fig. 2: eine schematische Darstellung einer zweiten erfindungsgemäßen Prozessorarchitektur, und
- Fig. 3: eine beispielhafte Ausführung einer Verknüpfungsanordnung zum Verknüpfen von Daten aus verschiedenen parallelen Datenpfaden zeigt.

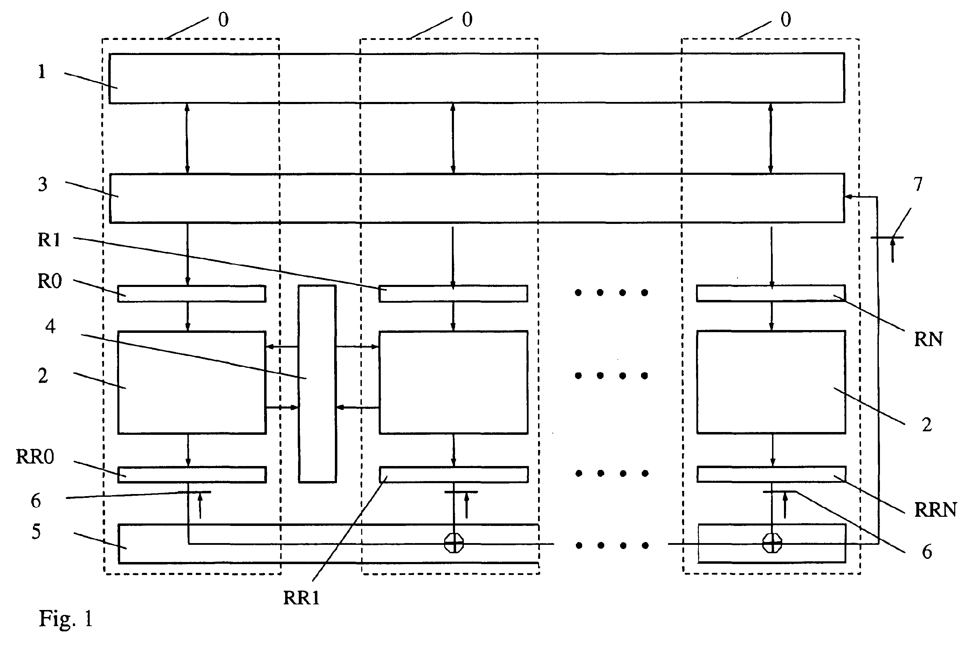

Fig. 1 zeigt eine beispielhafte erfindungsgemäß ausgebildete Prozessoranordnung in einer schematischen Darstellung. Diese umfasst einen Gruppenspeicher 1, in welchem Datengruppen unter einer Adresse speicherbar sind, wobei eine einzelne Datengruppe mehrere Datenelemente aufweist. In einer Streifenstruktur sind Verarbeitungseinheiten 2 mit jeweils einem Eingangsregister R₀...R_{N} und einem Ausgangsregister RR₀...RR_{N} angeordnet. Die Register könne je nach spezieller Ausführungsform auch als Registersatz ausgebildet sein, so dass mehrere Eingangs- bzw. Ausgangsregister umfasst sein können. Eine den Ausgangsregistern RR₀ bis RR_{N} nachgeordnete globale Verknüpfungsanordnung 5 ist als in der Eingangsstufe kombinatorisch und nicht taktgesteuertes Addiernetz ausgebildet. Zwischen den Verarbeitungseinheiten 2 und dem Gruppenspeicher 1 ist ferner eine globale Kommunikationseinheit 3 angeordnet, über die Daten aus dem Gruppenspeicher den jeweiligen Verarbeitungseinheiten 2 zugeführt werden können. Weiterhin ist es möglich, dass eine Datengruppe oder zumindest ein Element der Datengruppe unter Umgehung der Kommunikationseinheit direkt mit den zugeordneten Verarbeitungseinheiten verbindbar ist. Eine Datengruppe wird gleichzeitig und parallel aus dem Datenspeicher ausgelesen und auf mehrere Verarbeitungseinheiten aufgeteilt und in diesen Verarbeitungseinheiten 2 parallel verarbeitet. Diese Verarbeitungseinheiten umfassen jeweils zumindest eine Prozesseinheit und eine arithmetische Logikeinheit, die jedoch in der Figur nicht dargestellt sind, da sie für das Verständnis der Erfindung nicht von Bedeutung sind.

Sind die Register als Registersätze ausgebildet, kann jeweils zwischen einer Verarbeitungseinheit und dem zugeordneten Eingangsregistersatz bzw. Ausgangsregistersatz ferner zumindest eine Eingangsverknüpfungslogik bzw. zumindest eine Ausgangsverknüpfungslogik angeordnet sein, mit welchen Register eines Registersatzes innerhalb eines Datenpfades verbindbar sind. Jedes Element einer Datengruppe aus dem Gruppenspeicher 1 kann, wie erläutert, entweder direkt der zugeordneten Verarbeitungseinheit zugeführt werden oder mit Hilfe der Kommunikationseinheit auf andere Verarbeitungseinheiten verteilt werden. Über die Eingangsregister R₀...R_{N} gelangen die Daten in die jeweilige Verarbeitungseinheit 2, wobei das Ergebnis der Verarbeitung in das jeweilige Ausgangsregister RR₀ ... RR_{N} geschrieben wird. Diese Ergebnisdaten können wiederum direkt in den Gruppenspeicher 1 geschrieben oder mittels der Kommunikationseinheit 3 verteilt werden.

Zwischen benachbarten Verarbeitungseinheiten 2 ist eine lokale Verknüpfungsanordnung 4 angeordnet, mit welcher Daten aus den beiden angrenzenden Verarbeitungseinheiten 2 mit einer kombinatorischen und nicht taktgesteuerten Verknüpfungsanordnung verknüpft werden, wobei das Ergebnis in eines der beiden Verarbeitungseinheiten zurückgeschrieben wird. Beide Datenelemente werden in der lokalen Verknüpfungsanordnung 4 über ein kombinatorisches, nicht taktgesteuertes Netzwerk XOR-verknüpft, wodurch kein zusätzlicher Taktzyklus zur Ermittlung des Ergebnisses notwendig ist und die Verarbeitungseinheit, in welcher das Ergebnis weiter verarbeitet wird, keine interne Verzögerung erleidet.

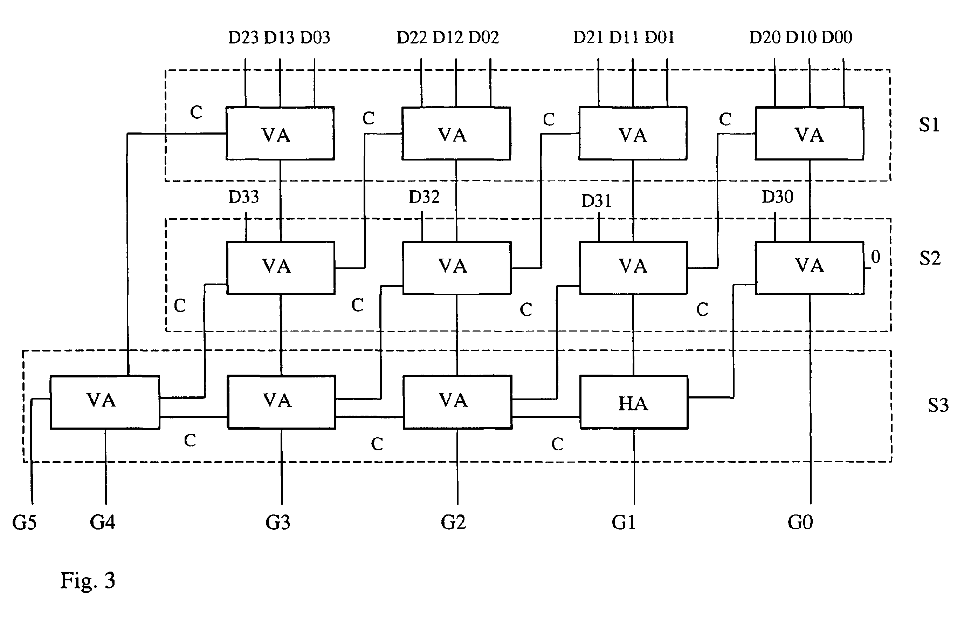

Wie obenstehend erläutert, sind alle Ausgangsregister RR₀...RR_{N} mit der globalen Verknüpfungsanordnung 5 verbunden, in der die einzelnen Ausgangsdaten aller (N+1) Verarbeitungseinheiten 2 addiert werden. Das Addiernetz der Verknüpfungsanordnung 5 ist in Fig. 3 für eine vierstreifige Prozessoranordnung dargestellt, wobei zur Einfachheit der Darstellung vier Bit-Datenwörter in der Verknüpfungsanordnung addiert werden. In einer ersten Stufe S1 werden mittels vier Volladdierer VA die einzelnen Bits von drei Datenwörtern D0 bis D2 aus den Registern RR₀, RR₁ und RR₂ addiert, wobei das Ergebnis jeweils auf einen zugeordneten Volladdierer der zweiten Stufe S2 gegeben wird und der Übertrag C an den Volladdierer der nächsten Stelle in der zweiten Stufe S2. In der Zeichnung ist eine Datenwortstelle mit Dij bezeichnet, wobei i das Datenwort (d.h. den Streifen) und j die Datenwortstelle festlegt. Als Eingangsgröße liegt an den vier Volladdierern VA der zweiten Stufe auch das jeweilige Bit des vierten Datenworts D3 aus dem Register RR₃ des vierten Streifens an. Da in der ersten und der zweiten Stufe der Verknüpfungsanordnung der Übertrag C nicht an den Volladdierer der nachfolgenden Stelle übertragen wird, können alle Berechnungen in beiden Stufen S1 und S2 gleichzeitig und sofort mit dem Anlegen der Daten an die Eingänge der Volladdierer durchgeführt werden. Erst in der letzten Stufe, die einen Halbaddierer HA und drei nachgeschaltete, aufeinanderfolgende Volladdierer VA umfasst, werden die Überträge C der niedrigeren Stelle an dem Volladdierer der nachfolgenden Stelle weitergeführt, sodass die in Fig. 3 dargestellte Verknüpfungsanordnung mit drei Übertragungsweiterleitungen innerhalb der letzten Teilstufe auskommt, die leicht in einem einzelnen Taktzyklus durchgeführt wird. Als Resultat ergibt sich ein 6-Bit Datenwort G, das in der letzten Stufe der Verknüpfungsanordnung durch die Zusammenführung eines Übertrags- und eines Summenvektors entsteht. Die höheren Stellen des Ergebnisworts werden mit Nullen zur Bildung einer Datengruppe aufgefüllt (in Fig. 3 nicht dargestellt) und über die Steuereinrichtung 7 in die globale Kommunikationseinheit 3 geführt, von welcher die berechnete Datengruppe entweder in den Gruppenspeicher eingespeichert wird oder auf die verarbeitungseinrichtungen verteilt wird.

Da die beiden ersten Stufen S1, S2 kombinatorisch und nicht taktgesteuert ausgeführt werden, weist jeder Eingang der globalen Verknüpfungsanordnung 5 ein steuerbares Tor 6 in Form eines Latches auf, mit dem eine Änderung in den Ausgangsregistern RR₁...RR_{N} in die globale Verknüpfungsanordnung 5 eingeführt werden kann. Hierdurch wird verhindert, dass jede Änderung in einem Ausgangsregister einer Verarbeitungseinheit automatisch dazu führt, dass die globale Verknüpfungsanordnung 5 Daten verknüpft, was immer mit einem Energieverbrauch verbunden ist. Auf diese Weise kann die Verknüpfung der Daten zu solchen Zeitpunkten angestoßen werden, zu welchen die in der Verknüpfungsanordnung zusammengeführten Daten benötigt werden bzw. nachdem alle Eingangsdaten vorliegen.

Nach einer anderen Ausführungsform der kombinatorischen Verknüpfungsanordnung ist diese durch das Vorsehen einer zusätzlichen XOR-Verknüpfung als Subtraktionsnetz ausgebildet oder kann eine Schiebeanordnung oder einen Inverter umfassen.

In einer weiteren, nicht dargestellten Ausführungsform der Erfindung ist eine Verknüpfungsanordnung zur Maximum-Bildung über mehrere Streifen ausgebildet. Die Anordnung weist mehrere Berechnungsstufen auf, in welchen jeweils die Daten zweier Streifen voneinander subtrahiert werden. Ist das Ergebnis negativ wird der Subtrahend, ist das Ergebnis positiv, der Minuend an die nächste Berechnungsstufe weitergegeben. Gleichzeitig wird ein Index an diese Berechnungsstufe übergeben, welcher den Streifen angibt, in welchem von den bisher berücksichtigten Streifen das Extremum liegt. Bei einer Maximum-Bildung über 8 Streifen ist somit ein Index von 3 Bit und sind 7 Berechnungsstufen notwendig. Diese können kaskadenartig, aber auch zumindest teilweise parallel verarbeitend ausgebildet sein.

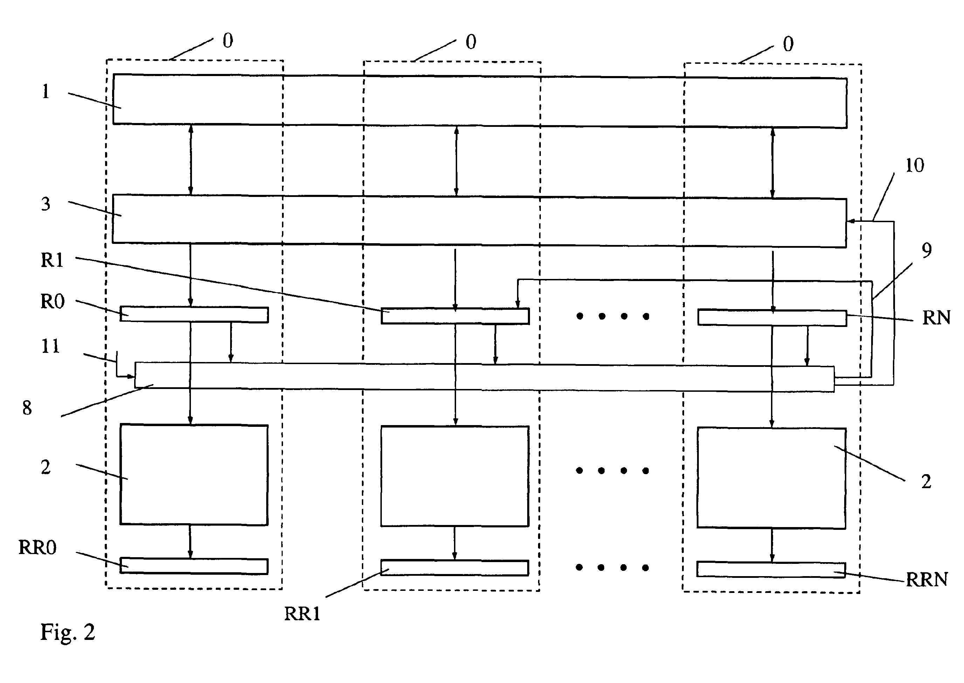

Fig. 2 zeigt in einer schematischen Darstellung eine weitere erfindungsgemäße Prozessoranordnung, bei welcher eine globale Verknüpfungsanordnung 8 mit den Eingangsregistern R₀...R_{N} verbunden ist. Die Verknüpfungsanordnung 8 umfasst zwei getrennte und unabhängige Logikanordnungen, von denen eine mittels der Steuerleitung 11 ausgewählt werden kann. Die erste Logikanordnung erzeugt eine Datengruppe, die über die globale Datenrückführung 10 in die globale Kommunikationseinheit 3 rückgeführt wird. Dagegen wird in der zweiten Logikanordnung ein Datenelement erzeugt, das über die lokale Datenrückführung 9 in das Eingangsregister R₁ der verarbeitungseinheit 2 des zweiten Streifens rückgekoppelt wird.

### Bezugszeichenliste

- 0: Streifen
- 1: Gruppenspeicher
- 2: Verarbeitungseinheit
- 3: globale Kommunikationseinheit
- 4: lokale Verknüpfungsanordnung
- 5: globale Verknüpfungsanordnung
- 6: Steuereinrichtung/Latch
- 7: Steuereinrichtung
- 8: globale Verknüpfungsanordnung
- 9: lokale Datenrückführung
- 10: globale Datenrückführung
- 11: Steuerleitung für globale Verknüpfungsanordnung
- S1: erste Stufe eines Addiernetzes
- S2: zweite Stufe eines Addiernetzes
- S3: dritte Stufe eines Addiernetzes
- Rᵢ: Eingangsregister (i= O...N)
- RRᵢ: Ausgangsregister (i= O...N)
- Di: Datenwort (i= 0...3)
- VA: Volladdierer
- HA: Halbaddierer
- C: Übertrag eines Volladdierers
- Gⱼ: j-te Stelle der Summe (j= 0...5)

## Patentansprüche

1. Verfahren zur Zusammenführung von Daten aus parallelen Datenpfaden (0) in einer Prozessoranordnung, bei welcher Daten in einem Datenspeicher (1) in Datengruppen mit mehreren Elementen aufgeteilt unter ein und derselben Adresse abgespeichert werden, aus diesem ausgelesen und Verarbeitungseinheiten zugeführt werden, wobei jedem Element einer Datengruppe eine Verarbeitungseinheit (2) zugeordnet wird und alle Elemente einer Datengruppe gleichzeitig und parallel aus dem Datenspeicher ausgelesen und als Eingangsdaten auf eine oder mehrere Verarbeitungseinheiten aufgeteilt und in diesen taktgesteuert parallel verarbeitet werden, **dadurch gekennzeichnet, dass** Eingangs-, Zwischen- und/oder Ausgangsdaten (Dᵢ) verschiedener Verarbeitungseinheiten (2) über zumindest eine, wenigstens abschnittsweise kombinatorische und nicht taktgesteuerte Operation verknüpft werden.

2. Verfahren nach Anspruch 1, **dadurch gekennzeichnet, dass** mit der Operation Daten (Dᵢ) aller Verarbeitungseinheiten (2) verknüpft werden.

3. Verfahren nach Anspruch 1 oder 2, **dadurch gekennzeichnet, dass** die Daten über eine logische und/oder eine arithmetische Operation verknüpft werden.

4. Verfahren nach Anspruch 1, 2 oder 3, **dadurch gekennzeichnet, dass** bei der Durchführung der Operation zumindest in einem Teilschritt (S1; S2) der Operation eine redundante Zahlendarstellung verwendet wird, insbesondere die Überträge in allen Stellen der Daten gleichzeitig gebildet und für den jeweils nächsten Teilschritt (S2; S3) verwendet werden.

5. Verfahren nach einem der Ansprüche 1 bis 4, **dadurch gekennzeichnet , dass** als Ergebnis der Operation ein Datenelement oder eine Datengruppe erzeugt wird.

6. Verfahren nach einem der Ansprüche 1 bis 5, **dadurch gekennzeichnet , dass** das Ergebnis der Operation in zumindest eine Verarbeitungseinheit (2) oder in ein dieser Verarbeitungseinheit zugeordnetes Register (Rᵢ, RRᵢ) rückgekoppelt wird.

7. Verfahren nach einem der Ansprüche 1 bis 6, **dadurch gekennzeichnet , dass** für die Zusammenführung der Daten eine von mehreren kombinatorischen, nicht taktgesteuerte Operationen ausgewählt wird.

8. Prozessoranordnung zur parallelen, taktgesteuerten Datenverarbeitung mit einem als Gruppenspeicher (1) ausgebildetem Datenspeicher und parallelen Verarbeitungseinheiten (2) die über eine Kommunikationseinheit (3) miteinander verbunden sind, wobei im Gruppenspeicher mindestens eine Datengruppe mit mehreren Elementen unter einer Adresse gespeichert ist und jedem Datenelement eine Verarbeitungseinheit, bestehend aus zumindest einer Prozesseinheit (MAC) und zumindest einer Speichereinheit, zugeordnet ist, die in einem Streifen (0) angeordnet sind, der mit einem weiteren Streifen gleichen Aufbaus benachbart ist, **dadurch gekennzeichnet, dass** eine zumindest abschnittsweise kombinatorische und nicht taktgesteuerte Verknüpfungsanordnung (4, 5, 8) vorgesehen ist, welche Daten aus verschiedenen Streifen (0), insbesondere Eingangs-, Zwischen- und/oder Ausgangsdaten (Dᵢ) verschiedener Verarbeitungseinheiten (2) miteinander verknüpft.

9. Prozessoranordnung nach Anspruch 8, **dadurch gekennzeichnet , dass** die Verknüpfungsanordnung (5) ein Addiernetz, Subtrahiernetz und/oder ein Netz zur Minumum/Maximum-Bildung umfasst, in welchem der Übertrag in einer vorgegebenen Stufe (S1, S2) an einer Stelle der Daten unabhängig von den vorhergehenden Stellen ermittelbar ist.

10. Prozessoranordnung nach Anspruch 9, **dadurch gekennzeichnet, dass** das Netz zur Minimum/Maximum-Bildung mehrere Berechnungsstufen aufweist, in welchen jeweils eine Subtraktion von Daten zweier Streifen durchführbar ist, wobei an eine nachfolgende Berechnungsstufe ein, einen Streifen anzeigender Index und das jeweilige Extremum führbar ist.

11. Prozessoranordnung nach einem der Ansprüche 8 bis 10, **dadurch gekennzeichnet , dass** mehrere derartiger Verknüpfungsanordnungen vorgesehen sind, von welchen eine programmgesteuert auswählbar ist.

12. Prozessoranordnung nach einem der Ansprüche 8 bis 11, **dadurch gekennzeichnet, dass** der Ausgang der Verknüpfungsanordnung (5) mit einem Register einer Verarbeitungseinheit oder einem Register verbunden ist, das einer Datengruppe zugeordnet ist.

13. Prozessoranordnung nach einem der Ansprüche 8 bis 12, **dadurch gekennzeichnet, dass** zumindest einem Eingangsregister der Verknüpfungsanordnung (4, 5, 8) eine Steuereinrichtung (6) zugeordnet ist, mit welcher die Registerdaten von der Verknüpfungsanordnung (4, 5, 8) abtrennbar sind.

## Claims

1. Method of bringing together data from parallel data paths (0) in a processor arrangement in which data is divided, in a data store (1), into data groups comprising a plurality of elements and is stored at one and the same address, is read out from the said data store (1), and is fed to processing units, each element in a data group having a processing unit (2) assigned to it and all the elements in a data group being read out of the data store simultaneously and in parallel and being distributed to one or more processing units as input data and being processed therein in parallel under clock control, **characterised in that** input, intermediate and/or output data (Dᵢ) in different processing units (2) is united by means of at least one operation of which at least a section or sections is/are combinatory and which is not clock-controlled.

2. Method according to Claim 1, **characterised in that** data (Dᵢ) in all the processing units (2) is united by the operation.

3. Method according to Claim 1 to 2, **characterised in that** the data is united by means of a logic and/or arithmetic operation.

4. Method according to Claim 1, 2 or 3, **characterised in that**, in performing the operation, a redundant numerical representation is used at least in one step (S1; S2) into which the operation is divided, and in particular the carries are formed simultaneously at all the digits of the data and are used for whichever is the next step (S2; S3) in the given case.

5. Method according to any one of Claims 1 to 4, **characterised in that** a data element or a data group is produced as the result of the operation.

6. Method according to any one of Claims 1 to 5, **characterised in that** the result of the operation is fed back to at least one processing unit (2) or to a register (Rᵢ, RRᵢ) assigned to this processing unit.

7. Method according to any one of Claims 1 to 6, **characterised in that** one of a plurality of combinatory operations which are not clock-controlled;is selected for the bringing together of the data.

8. Processor arrangement for the parallel clock-controlled processing of data, having a data store in the form of a group store (1) and parallel processing units (2) which are connected together via a communications unit (3), at least one data group comprising a plurality of elements being stored at one address in the group store and each data element having assigned to it one processing unit comprising at least one process unit (MAC) and at least one storage unit which are arranged in a stripe (0) which is adjacent to further stripes of the same construction, **characterised in that** a uniting arrangement (4, 5, 8) is provided of which at least a section or sections is/are combinatory, which is not clock-controlled and which unites data from different stripes (0), and in particular input, intermediate and/or output data (Dᵢ) in different processing units (2), with one another.

9. Processor arrangement according to Claim 8, **characterised in that** the uniting arrangement (5) comprises an adding network, a subtracting network and/or a network for forming minima/maxima, in which, at a preset stage (S1, S2), the carry can be determined at a digit of the data independently of the preceding digits.

10. Processor arrangement according to Claim 9, **characterised in that** the network for forming minima/maxima has a plurality of calculating stages in each of which a subtraction of data from two stripes can be performed, the particular extreme and an index which indicates a stripe being feedable to a succeeding calculating stage.

11. Processor arrangement according to any one of Claims 8 to 10, **characterised in that** a plurality of such uniting arrangements are provided, of which one can be selected under programmed control.

12. Processor arrangement according to any one of Claims 8 to 11, **characterised in that** the output of the uniting arrangement (5) is connected to a register of a processing unit or to a register which is assigned to a data group.

13. Processor arrangement according to any one of Claims 8 to 12, **characterised in that** at least one input register of the uniting arrangement (4, 5, 8) has assigned to it a control means (6) by which the data in the register can be held barred from the uniting arrangement (4, 5, 8).

## Revendications

1. Procédé de combinaison de données à partir de chemins de données parallèles (0) dans un dispositif processeur, selon lequel on enregistre des données sous une seule et même adresse dans une mémoire de données (1), en les répartissant en groupes de données de plusieurs éléments, on les lit dans celle-ci et on les envoie dans des unités de traitements, une unité de traitement (2) est associée à chaque élément d'un groupe de données et tous les éléments d'un groupe de données sont lus simultanément et parallèlement dans la mémoire de données et sont répartis comme données d'entrée sur une ou plusieurs unités processeur et traitées dans celles-ci parallèlement à une cadence commandée,
**caractérisé en ce que**
des données d'entrée, intermédiaires et/ou de sortie (Dᵢ) de différentes unités processeur (2) sont combinées par au moins une opération au moins partiellement combinatoire et non commandée par rythmeur.

2. Procédé selon la revendication 1,
**caractérisé en ce que**
des données (Dᵢ) de toutes les unités processeur (2) sont combinées par cette opération.

3. Procédé selon la revendication 1 ou 2,
**caractérisé en ce que**
les données sont combinées par une opération logique et/ou arithmétique.

4. Procédé selon la revendication 1, 2 ou 3,
**caractérisé en ce que**
lors de l'exécution de l'opération, on utilise une représentation redondante au moins pendant une étape partielle (S1 ; S2) de l'opération, en particulier on forme les reports dans tous les endroits des données simultanément, et on les utilise pour l'étape partielle suivante respective (S2 ; S3).

5. Procédé selon l'une quelconque des revendications 1 à 4,
**caractérisé en ce qu'**
on produit un élément de données ou un groupe de données comme résultat de l'opération.

6. Procédé selon l'une quelconque des revendications 1 à 5,
**caractérisé en ce que**
le résultat de l'opération est réinjecté dans au moins une unité processeur (2) ou dans un registre (Rᵢ, RRᵢ) associé à cette unité processeur.

7. Procédé selon l'une quelconque des revendications 1 à 6,
**caractérisé en ce qu'**
on choisit pour la combinaison des données une opération parmi plusieurs opérations combinatoires, non commandée en cadence.

8. Dispositif processeur pour le traitement parallèle de données commandé en cadence, avec une mémoire de données formant une mémoire de groupes (1) et des unités processeur parallèles (2) reliées entre elles par une unité de communication (3), dans lequel au moins un groupe de données avec plusieurs éléments est mémorisé sous une adresse dans la mémoire de groupes et chaque élément de données est associé à une unité de traitement composée d'au moins une unité processeur (MAC) et d'au moins une unité de mémoire, disposées dans une bande (0) voisine d'une autre bande de même structure,
**caractérisé en ce qu'**
on prévoit une unité de combinaison (4, 5, 8) au moins partiellement combinatoire non commandée en cadence, qui combine entre elles des données de différentes bandes (0), en particulier des données d'entrée, intermédiaires et/ou de sortie (Dᵢ) de différentes unités processeur (2).

9. Dispositif processeur selon la revendication 8,
**caractérisé en ce que**
le dispositif de combinaison (5) comprend un réseau additionneur, un réseau soustracteur et/ou un réseau de formation de minimum/maximum, dans lequel le report à une étape prédéterminée (S1, S2) peut être déterminé à un endroit des données indépendamment des endroits précédents.

10. Dispositif processeur selon la revendication 9,
**caractérisé en ce que**
le réseau de formation de minimum/maximum comprend plusieurs étapes de calcul, dans lesquelles on peut chaque fois exécuter une soustraction de données de deux bandes, et on peut reporter à une étape de calcul suivante un index indiquant une bande et l'extremum respectif.

11. Dispositif processeur selon l'une quelconque des revendications 8 à 10,
**caractérisé en ce qu'**
il est prévu plusieurs de ces dispositifs de combinaison, dont on peut en choisir un par une commande par programme.

12. Dispositif processeur selon l'une quelconque des revendications 8 à 11,
**caractérisé en ce que**
la sortie du dispositif de combinaison (5) est reliée à un registre d'une unité processeur ou à un registre associé à un groupe de données.

13. Dispositif processeur selon l'une quelconque des revendications 8 à 12,
**caractérisé en ce qu'**
on associe à au moins un registre d'entrée du dispositif de combinaison (4, 5, 8), un dispositif de commande (6) avec lequel les données de registre peuvent être séparées du dispositif de combinaison (4, 5, 8).
